# EUROPEAN PATENT APPLICATION

(11) **EP 0 803 346 A2**
(43) Date of publication of application: **29.10.1997**
(21) Application number: 97105976.1
(22) Date of filing: 11.04.1997
(51) Int. Cl.: B30B 9/24

(54) **Double-belt press with high dewatering capacity**

(30) Priority: 22.04.1996 IT MI960781
(71) Applicant: SERNAGIOTTO S.P.A., I-27045 Casteggio (Pavia) (IT)
(72) Inventor: Risi, Danilo, 27045 Casteggio (Pavia) (IT); Negrini, Roberto, 27040 Pinarolo PO (Pavia) (IT); Casaschi, Roberto, 27058 Voghera (Pavia) (IT)
(74) Representative: Luksch, Giorgio, Dr.-Ing.

(57) **Abstract**

A double-belt press for dewatering pasty materials, in which said material is made to pass between two endless filter belts (3, 4) arranged to move in the same direction and to pass, within a pressing region, along and over a plurality of pressing rolls (5, 6, 7A-E, 8, 9, 10). The pressing rolls are arranged to subject the material to gradually increasing pressures, the pressure exerted by the entry roll (5) being variable, depending on the material, between 0.1 and 0.83 kg/cm², whereas that exerted by the exit roll (10) is variable between 0.9 and 4.9 kg/cm², the time taken by the material from entering the first roll to leaving the last roll being variable between 3 and 32 minutes.

## Description

This invention relates to a double-belt press for dewatering pasty materials in accordance with the pre-characterising part of claim 1.

In the present context the term "pasty materials" means for example partly dewatered sludge of municipal or industrial origin, obtained from the exit of a usual double-belt press (for example of the type described in US 4,147,101, US 4,148,616 or US 4,544,447) or from similar devices such as centrifuges and vacuum filters, or slurry with a high concentration of solids such as clay, carbonates or silicates.

Known belt presses (see for example those described in the aforesaid patents) are generally used for dewatering liquid-solid suspensions, in which the solid is present in a very low percentage (about 2-3%).

Dewatering is usually effected in three separate treatment regions after adding chemical adjuvants (polyelectrolytes) to facilitate separation between the solid phase and the liquid phase; these regions are:
- drainage region in which most of the water is discharged by gravity through the permeable belts;
- low pressure region in which a specific pressure less than 0.1 kg/cm² is exerted on the sludge cake;
- high pressure region in which a specific pressure less than 0.6 kg/cm² is exerted on the sludge cake.

The compressive pressures on the cake enclosed between the two permeable cloths are obtained by tensioning the cloths using hydraulic or pneumatic systems and passing these about pressing rolls where the specific pressures are generated.

The material leaving known presses often requires further dewatering treatment, this being generally achieved by passing the initially dewatered material into usual thermal dryers or into devices which add inert material to it to increase its degree of dryness.

High solids-concentration materials to be dewatered are subjected to similar methods.

It should be noted that known double-belt presses cannot dewater the treated materials to a greater extent because within the drainage region the material to be dewatered must dispose of a large water quantity in a relatively short time, and for this reason the apertures in the belts cannot be too narrow, meaning that the material cannot be subjected to higher pressure because in such a case a large part of the material to be dewatered would pass through the belt apertures.

A further problem present in known belt presses is that generally the two filter belts undergo slippage relative to each other on leaving the pressing region.

It has been found experimentally that one of the causes which most influence the life of the filter belts is precisely the relative slippage of the cloths leaving the pressing region. This is due, for example, to the fact that because of belt slippage, creases can form in the belts, which can result in their rupture.

The problem of relative slippage of the press belts has also up to the present time prevented the construction of presses with belts which could be tensioned to a greater degree and hence exert a greater dewatering pressure on the treated material.

An object of the present invention is to provide a double-belt press able to mechanically remove further water from previously dewatered material or from high solids-concentration material.

This and further objects which will be apparent to the expert of the art are attained by a double-belt press in accordance with the characterising part of claim 1.

A further object of the present invention is to provide a double-belt press in which the filter belts are damaged to a lesser extent and hence have a longer life.

This and further objects which will be apparent to the expert of the art are attained by a press in accordance with the characterising part of claim 1.

The present invention will be more apparent from the accompanying drawings, which are provided by way of example and in which:
Figure 1 is a a schematic front view of a press according to the invention;
Figure 2 is a schematic side view thereof in the direction of the arrow A of Figure 1;
Figure 3 is a schematic view thereof from above;
Figure 4 is an enlarged schematic view of the rolls in the direction indicated by the arrow IV in Figure 1.

With reference to said figures, a press according to the invention comprises a feed station 1 for the material to be dewatered and a pressing region 2 comprising two endless filter belts 3 and 4 which move in the same direction along and over ten rolls 5, 6, 7A, B, C, D, E, 8, 9, 10.

The feed station 1 is of conventional type and comprises a hopper (not shown) for storing the material to be dewatered, and of such a volume as to ensure press operation at constant speed even if the quantity of feed sludge varies. For this purpose the press comprises, for example, a conventional sensor (not shown) arranged to measure the material level in the hopper and connected to a usual control unit which on the basis of the signal from said sensor automatically varies the speed of the belts 3 and 4. The station 1 also comprises usual plates, for example formed of synthetic material, to facilitate sliding and favour the planarity of the belt 4 passing through the station 1.

Above the belt 4 the station 1 comprises a conventional member 11, directly connected to the feed hopper, to distribute onto the underlying belt a uniform layer of material to be pressed. The member 11 comprises, for example, a roller extending for the entire width of the underlying belt 4 and moving in the same direction thereas, at a peripheral speed greater than the advancement speed of said belt. The member 11 is advantageously adjustable in height so as to be able to vary the thickness of material entering the press according to the type of sludge.

The member 11 also comprises a usual scraper blade 12 for maintaining the roller surface clean and ensuring a constant delivery from the feed hopper. The member 11 is driven by a conventional electric motor 13.

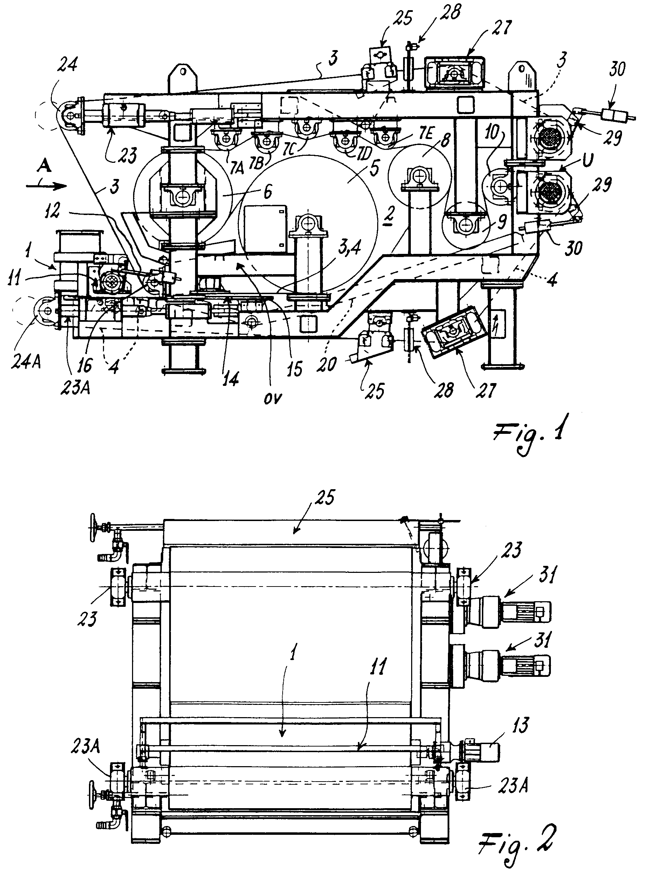

The pressing region 2 comprises an entry section 14 for forming a cake of material to be dried. In this section 14 the lower belt 4 is always supported by plates 15 as in the feed station 1, and the upper belt 3 converges towards the lower belt so as to exert a preliminary pressure on the material and form a material cake. For this purpose the upper belt is guided by an idle roller 16 which is advantageously adjustable in height so as to be able to apply different initial pressures according to the material to be treated. The entry section is followed by the actual pressing region which comprises two first rolls 5 and 6 of decreasing diameter (with respect to the direction of advancement of the belts) of size equal to the width of the belts and with their axes of rotation parallel but at different height, five rolls 7A-E all of equal size and arranged such that the belts are guided along a serpentine path, and three final rolls 8, 9, 10 of decreasing diameter and with their axes of rotation parallel but at different heights (see Figure 1).

The first roll 5 has preferably a diameter much greater than the rolls provided in known presses, for example 1.2 m (usual press rolls have a diameter of 0.2 m). This roll applies to the cake of material between the belts a pressure which is preferably approximately equal to a conventional belt press, ie a pressure of about 0.1-0.83 kg/cm² according to the material treated.

It should be noted that because of the large size of the roll 5, the pressing surface and the pressing time are much greater than those of known presses. In this manner the roll 5 ensures good stabilisation of the cake enclosed between the two cloths and the gradual removal of water without subjecting the cake to shock. The drainage water is discharged in the usual manner, both through the two filter belts and via the roll, that wall thereof in contact with the belt being perforated. The device, as is usual in known presses, comprises collection troughs 20 for the liquid extracted from the material to be dewatered, and relative pumping members.

The pressing region comprises a series of further rolls 6, 8, 9, 10 of decreasing diameters, with five rolls 7A-E of equal diameter therebetween. As the diameters of the rolls 6, 8, 9, 10 decrease with the operating direction, a gradually increasing pressure is inserted on the material cake.

Advantageously the rolls 5, 6, 8, 9, 10 are also arranged such that the filter belts follow a path comprising a succession of S-shaped portions.

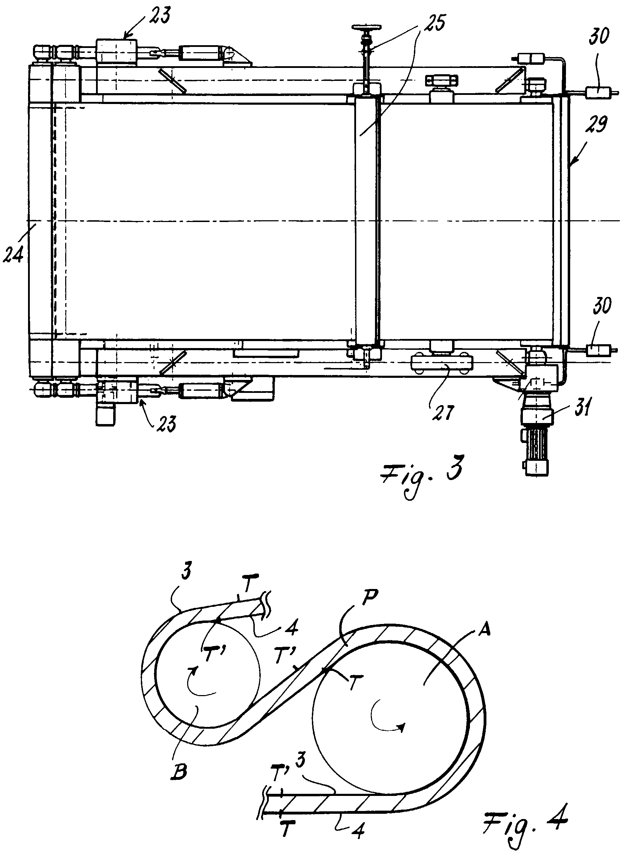

In this manner, as shown in Figure 4, whereas before entering into contact with the roll A the two belts 3 and 4 have undergone no relative slippage, ie the reference letters T and T' on the two belts are in the same position when they come into contact with the first roll, the more outer belt undergoes slippage in the direction of advancement of the belts relative to the more inner belt and, vice versa, when the belts make contact with the second roll B, the belt which was previously the more outer has now become the more inner and the more inner has become the more outer, with the result that this latter belt undergoes slippage in the direction of advancement of the belts.

Consequently, not only is there a pressing force acting on the material cake P between the two belts but also a shear force directed alternately in the same direction as the direction of advancement of the belts and in the opposite direction.

Advantageously, by suitably arranging and dimensioning the rolls 5, 6, 7A-E, 8, 9, 10 the relative slippage between the two belts within the pressing region can be made such that this slippage is zeroed upon arrival at the exit U from this region.

To achieve this, if working with a material cake of 15 mm thickness on entry and 10 mm on exit, the rolls 5, 6, 7A-7D, 8, 9, 10 should have the following diameters, with the belts having the following contact angles about the rolls:
roll 5, diameter 1200 mm, contact angle 235°
roll 6, diameter 850 mm, contact angle 239°
roll 7A, diameter 202 mm, contact angle 34°
roll 7B, diameter 202 mm, contact angle 45°
roll 7C, diameter 202 mm, contact angle 30°
roll 7D, diameter 202 mm, contact angle 45°
roll 7E, diameter 202 mm, contact angle 39°
roll 8, diameter 572 mm, contact angle 116°
roll 9, diameter 424 mm, contact angle 210°
roll 10, diameter 330 mm, contact angle 118°.

It should be noted that the aforegiven arrangement is only one of the possible arrangements for avoiding mutual slippage of the belts. On the basis of the given data, an expert of the art can easily devise arrangements different from that indicated.

It should also be noted that also in usual double-belt presses the rolls about which the filter belts pass could be advantageously positioned and dimensioned in accordance with the invention, ie such as to avoid relative belt slippage by their exit from the pressing region.

The pressure on the material cake enclosed between the belts 3 and 4 is directly proportional to the tension in the belts and to the diameter of the rolls, the contact angle determining the time for which pressure is exerted by the various rolls.

It has been found experimentally that depending on the material treated, the pressure exerted by the entry roll 5, as already stated, can advantageously vary between 0.10 and 0.83 kg/cm², while that exerted by the exit roll can vary between 0.9 and 4.9 kg/cm², and the time taken for the material to travel from the first roll 5 to the last roll 10 can vary between 3 and 32 minutes.

With said values it has been found that excellent dewatering is obtained comparable to that obtained with known processes using addition of inert materials.

As is usual in belt presses, the tension in the belts 3 and 4 can be adjusted by operating hydraulic members 23A, 23 which move idle guide rollers 24A, 24 for the belts 3 and 4 so as to vary the pressure exerted on the cake in accordance with its stability.

The belts 3 and 4 are preferably tubular without joints, of the type marketed under the brand name "Beta Band" by the Austrian company Huyck Austria.

It should be noted that these belts are able to withstand the high tension to which they are subjected in the press of the invention, ie to a continuous working tension of up to 70 kg/cm, which results in specific pressures on the cake of 5-10 times greater that those usually used in known belt presses. Consequently, by virtue of the device of the invention, the combination of high pressure and alternate shear force exerted on the cake to be dewatered, the lengthy duration of the pressing stage and the weave of the belts 3 and 4 which makes them permeable to water but not to solids, enables about a further 30-40% of water to be extracted from a material previously dewatered with a known belt press.

Advantageously, to maintain the belts permeable with time, the device comprises usual members 25 for continuously or intermittently washing the belts, for example with pressurized water sprayers.

The device also includes usual members 26 for automatically aligning the belts 3 and 4 with the centre of the rollers, for example comprising a pneumatically oscillating roller 27, and sensors 28 for sensing their position.

The cake of dewatered material leaving the press is preferably removed by a conventional pair of scrapers 29, for example of synthetic material, in contact with each belt 3 and 4, the pressure exerted by the scrapers 29 on the belts being able to be varied by acting for example on counterweights 30.

The travel speed of the belts 3 and 4 can be adjusted by acting on the independent drive rollers for the two belts, which are driven by independent geared motor units 31 connected to a conventional control unit, so as to be able to vary their speed according to the level of material in the feed hopper.

Finally, it should be noted that the aforedescribed device has been illustrated by way of example and that numerous modifications are possible, all falling within the same inventive concept.

## Claims

1. A double-belt press for dewatering pasty materials, in which said material is made to pass between two endless filter belts (3, 4) arranged to move in the same direction and to pass, within a pressing region (2), along and over a plurality of pressing rolls (5, 6, 7A-E, 8, 9, 10), characterised in that said pressing rolls (5, 6, 7A-E, 8, 9, 10) are arranged to subject the material to increasing pressures, the pressure exerted by the entry roll (5) being greater than at least 0.1 kg/cm², the pressure exerted by the exit roll (10) being greater than at least 0.9 kg/cm², the time taken by the material from entering the first roll to leaving the last roll being at least 3 minutes.

2. A press as claimed in claim 1, characterised in that the pressure exerted by the entry roll (5) is variable, depending on the material, between 0.16 and 0.83 kg/cm², whereas that exerted by the exit roll (10) is variable between 0.9 and 4.9 kg/cm², the time taken by the material from entering to leaving the pressing region being variable between 3 and 32 minutes.

3. A press as claimed in claim 1, characterised in that the pressing rolls (5, 6, 7A-E, 8, 9, 10) are positioned in such a manner as to cause the belts (3, 4) to follow within the pressing region (2) a path consisting of a plurality of S-shaped portions.

4. A press as claimed in claim 3, characterised in that the pressing rolls (5, 6, 7A-E, 8, 9, 10) are positioned in such a manner that the belts follow within the pressing region (2) a path consisting of an S-shaped first portion, a serpentine second portion and two S-shaped final portions.

5. A press as claimed in claim 1, characterised in that the first pressing roll (5) of the pressing region (2) has a diameter of at least 1 m.

6. A press as claimed in claim 1, characterised in that the angle of contact of the belts (3, 4) about the first pressing roll (5) of the pressing region is at least 200°.

7. A press as claimed in claim 1, characterised in that the pressing rolls of the pressing region comprise two first rolls (5, 6) of decreasing diameters, a plurality of second rolls (7A-E) of diameters less than the first rolls, and a plurality of third rolls (8, 9, 10) of decreasing diameters which are less than the first rolls but greater than the second rolls.

8. A press as claimed in claim 1, characterised in that said pressing rolls (5, 6, 7A-E, 8, 9, 10) are positioned such that the filter belts (3, 4), on passing about them, undergo slippage relative to each other to determine a shear force on the material cake (P) enclosed between said belts, said force acting in the same direction as the belt advancement at a first roll and in the opposite direction at the next roll, said rolls being sized and positioned such that on leaving the pressing region (2) the relative slippage between the belts has become substantially zero.

9. A double-belt press for dewatering materials in general, in which said material is made to pass between two endless filter belts (3, 4) arranged to move in the same direction and to pass, within a pressing region, along and over a plurality of pressing rolls (5, 6, 7A-E, 8, 9, 10), characterised in that said pressing rolls are positioned such that the filter belts (3, 4) when passing over them undergo slippage relative to each other, to determine a shear force on the material cake (P) enclosed between said belts, said force acting in the same direction as the advancement of the belts (3, 4) at a first roll and in the opposite direction at the next roll, said rolls being sized and positioned such that on leaving the pressing region (2) the relative slippage between the belts has become substantially zero.

10. A press as claimed in claim 9, characterised by comprising pressing rolls (5, 6, 7A-E, 8, 9, 10) in accordance with the characteristics of one or more of claims 1 to 7.
